# EUROPEAN PATENT APPLICATION

(11) **EP 4 062 816 A1**
(43) Date of publication of application: **28.09.2022**
(21) Application number: 20890801.2
(22) Date of filing: 12.10.2020
(51) Int. Cl.: A47L 11/40, A47L 11/24, H04N 5/225

(54) **CAMERA DEVICE AND CLEANING ROBOT**

(30) Priority: 18.11.2019 CN 201921989960 U; 18.11.2019 CN 202021457304 U
(71) Applicant: Beijing Roborock Technology Co., Ltd., Beijing 100085 (CN)
(72) Inventor: YU, Guang, Beijing 100085 (CN)
(74) Representative: Studio Torta S.p.A.
(86) International application number: PCT/CN2020/120486
(87) International publication number: WO 2021/098410

(57) **Abstract**

A camera device (200) and a cleaning robot (100). The camera device (200) comprises an installation frame (20) and a camera (21) installed at the installation frame (20). The installation frame (20) is provided with an installation recess (201) matching the camera (21). An elastic connection member (202) is fixedly connected to a sidewall of the installation recess (201). After the camera (21) has been connected to the interior of the installation recess (201), the camera (21) forms an interference fit with the installation recess (201) by means of the elastic connection member (202), and is connected to the interior of the installation recess (201) under the action of an elastic force generated by the squeezed and deformed elastic connection member (202). When applied in a cleaning robot (100), the camera device (200) exhibits favorable shake resistance and good stability. Moreover, when a distance on an optical axis between two cameras (21) changes, the cameras (21) can be replaced and calibrated at any time, thereby enhancing the convenience of maintenance and repair.

## Description

### CROSS-REFERENCE TO RELATED APPLICATIONS

The present application claims priority to Chinese Patent Applications No. 201921989960.X and No. 202021457304.8 filed on November 18, 2019, which are incorporated herein by reference in their entireties.

### TECHNICAL FIELD

The present application relates to the field of cleaning robot technologies, and in particular, to a camera apparatus and a cleaning robot.

### BACKGROUND

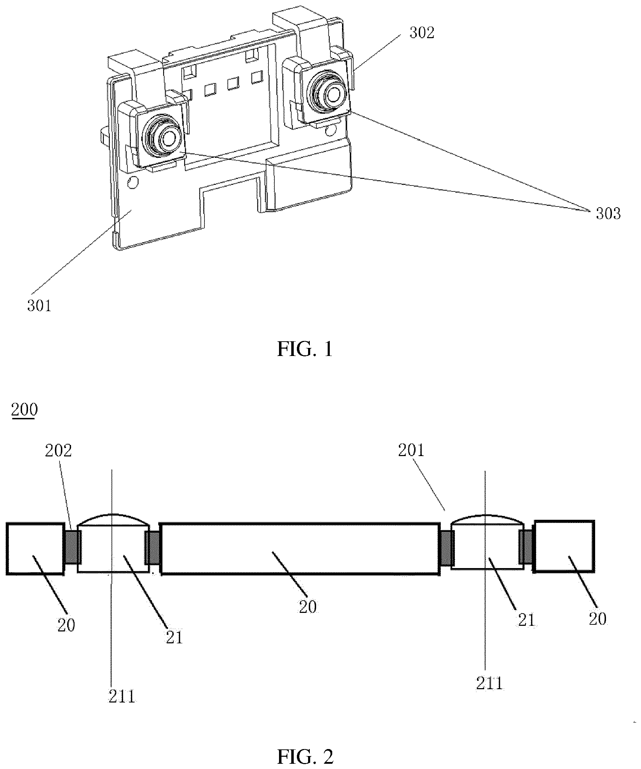

As shown in FIG. 1, a visual cleaning robot uses a binocular camera 303 to recognize an obstacle on the floor, and can obtain obstacle information in a working environment of the cleaning robot, such as an obstacle size, an obstacle shape, an obstacle type, and a distance between the obstacle and the cleaning robot, thereby greatly improving the intelligence of the cleaning robot and enhancing the cleaning efficiency.

In the binocular cleaning robot, a distance between optical axes of the binocular camera 303 is a fixed value determined through cooperation between a structural design and a visual algorithm in the research and development process. A common mounting method is to place the camera 303 in a mounting groove 302 of a mounting bracket 301 through clearance fit, and fix a rear end of the camera 303 onto the mounting bracket 301.

For ease of mounting, the binocular camera 303 is in clearance fit with the camera mounting groove 302, and then the camera 303 is fixed onto the mounting bracket 301 through pasting, etc. However, because the distance between the optical axes of the binocular camera 303 has great impact on positioning, when vibration occurs, the distance between the optical axes of the binocular camera 303 changes, resulting in inaccurate positioning. To adjust the distance between the optical axes, it is necessary to violently disassemble the binocular camera 303, which is extremely inconvenient for maintenance and repair.

It should be noted that the information disclosed in the BACKGROUND section is used only to enhance an understanding of the background of the present disclosure, and therefore may include information that does not constitute prior art known to a person of ordinary skill in the art.

### SUMMARY

Embodiments of the present application provide a camera apparatus and a cleaning robot.

According to an aspect, embodiments of the present application provide a camera apparatus, where the camera apparatus includes a mounting bracket and a camera mounted on the mounting bracket; the mounting bracket is provided with a mounting groove matching the camera; a side wall of the mounting groove is fixedly connected to an electric connecting part; and after the camera is connected to the mounting groove, the camera is in interference fit with the mounting groove through the elastic connecting part, so that the camera is connected to the mounting groove under the action of an elastic force generated by the elastic connecting part due to squeezing and deformation.

According to an aspect of the embodiments of the present application, the camera has a lens, and in a direction perpendicular to a central axis of the lens, a cross-sectional area of the camera is smaller than a cross-sectional area of the mounting groove, so that there is a gap between the camera and the mounting groove.

According to an aspect of the embodiments of the present application, the elastic connecting part is arranged in the gap, and a side of the elastic connecting part facing the mounting groove is fixedly connected or detachably connected to the mounting bracket.

According to an aspect of the embodiments of the present application, there are two cameras and two mounting grooves, and the mounting grooves are arranged in a one-to-one correspondence with the cameras.

According to an aspect of the embodiments of the present application, two elastic connecting parts are arranged in each mounting groove, and the two elastic connecting parts are arranged opposite to each other in a direction of a connection line between center points of the two cameras. According to an aspect of the embodiments of the present application, in a direction of a connection line between center points of the two cameras, thicknesses of the two elastic connecting parts are adjustable, and are used to adjust the distance between the optical axes of the two cameras. According to an aspect of the embodiments of the present application, the elastic connecting part is a ring structure arranged around the side wall of the mounting groove.

According to an aspect of the embodiments of the present application, there are a plurality of elastic connecting parts, and the plurality of elastic connecting parts are arranged at intervals in a circumferential direction of the mounting groove.

According to an aspect of the embodiments of the present application, the elastic connecting part and the mounting bracket are an integrated structure, and hardness of the elastic connecting part is less than hardness of the mounting bracket.

According to another aspect, embodiments of the present application provide a cleaning robot, which includes the foregoing camera apparatus.

According to still another aspect, embodiments of the present application provide a cleaning robot, where the cleaning robot includes a machine body, a perception system, a control system, and a driving system; the perception system includes a laser distance sensor and a camera; the laser distance sensor is located on a top surface of the cleaning robot; and the camera is mounted on the cleaning robot through a mounting bracket, and a field of view of the camera includes a traveling direction of the cleaning robot.

According to an aspect of the embodiments of the present application, the mounting bracket is provided with a mounting groove matching the camera, and the camera is mounted in the mounting groove.

According to an aspect of the embodiments of the present application, a side wall of the mounting groove is fixedly connected to an electric connecting part; and after the camera is mounted in the mounting groove, the camera is in interference fit with the mounting groove through the elastic connecting part, so that the camera is connected to the mounting groove under the action of an elastic force generated by the elastic connecting part due to squeezing and deformation. According to an aspect of the embodiments of the present application, the camera has a lens, and in a direction perpendicular to a central axis of the lens, a cross-sectional area of the camera is smaller than a cross-sectional area of the mounting groove, so that there is a gap between the camera and the mounting groove.

According to an aspect of the embodiments of the present application, the elastic connecting part is arranged in the gap, and a side of the elastic connecting part facing the mounting groove is fixedly connected or detachably connected to the mounting bracket.

According to an aspect of the embodiments of the present application, there are two cameras and two mounting grooves, and the mounting grooves are arranged in a one-to-one correspondence with the cameras.

According to an aspect of the embodiments of the present application, two elastic connecting parts are arranged in each mounting groove, and the two elastic connecting parts are arranged opposite to each other in a direction of a connection line between center points of the two cameras. According to an aspect of the embodiments of the present application, in a direction of a connection line between center points of the two cameras, thicknesses of the two elastic connecting parts are adjustable, and are used to adjust the distance between the optical axes of the two cameras. According to an aspect of the embodiments of the present application, the elastic connecting part is a ring structure arranged around the side wall of the mounting groove.

According to an aspect of the embodiments of the present application, there are a plurality of elastic connecting parts, and the plurality of elastic connecting parts are arranged at intervals in a circumferential direction of the mounting groove.

According to an aspect of the embodiments of the present application, the elastic connecting part and the mounting bracket are an integrated structure, and hardness of the elastic connecting part is less than hardness of the mounting bracket.

According to still another aspect, embodiments of the present application provide a cleaning robot, where the cleaning robot includes a machine body, a perception system, a control system, and a driving system; the perception system includes a laser distance sensor and two cameras; the laser distance sensor is located on a top surface of the cleaning robot; and the two cameras are mounted on the cleaning robot through a mounting bracket.

According to an aspect of the embodiments of the present application, the mounting bracket is provided with mounting grooves matching the two cameras, respectively, and each camera is mounted in the corresponding mounting groove.

According to an aspect of the embodiments of the present application, a side wall of each mounting groove is fixedly connected to an electric connecting part; and after each camera is mounted in the corresponding mounting groove, the camera is in interference fit with the mounting groove through the elastic connecting part, so that the camera is connected to the mounting groove under the action of an elastic force generated by the elastic connecting part due to squeezing and deformation. According to an aspect of the embodiments of the present application, the camera has a lens, and in a direction perpendicular to a central axis of the lens, a cross-sectional area of the camera is smaller than a cross-sectional area of the mounting groove, so that there is a gap between the camera and the mounting groove.

According to an aspect of the embodiments of the present application, the elastic connecting part is arranged in the gap, and a side of the elastic connecting part facing the mounting groove is fixedly connected or detachably connected to the mounting bracket.

### BRIEF DESCRIPTION OF DRAWINGS

The following describes the features, advantages, and technical effects of example embodiments of the present application with reference to the accompanying drawings.
FIG. 1 is an axonometric view of a camera apparatus described in the BACKGROUND section;
FIG. 2 is a schematic diagram of a planar structure of a camera apparatus according to some embodiments of the present application;
FIG. 3 is a top view of a cleaning robot according to some embodiments of the present application;
FIG. 4 is a bottom view of a cleaning robot according to some embodiments of the present application;
FIG. 5 is a side view of a cleaning robot according to some embodiments of the present application;
   and
FIG. 6 is an axonometric view of a cleaning robot according to some embodiments of the present application.

In the drawings:
100: cleaning robot;
110: machine body; 111: forward portion; 112: backward portion;
120: perception system; 121: location determining apparatus; 122: buffer; 123: cliff sensor;
130: control system;
140: driving system; 141: driving wheel module; 142: driven wheel;
150: dry cleaning system 150; 151: sweeping system; 152: side brush; 170: man-machine interaction system;
200: camera apparatus;
20: mounting bracket; 201: mounting groove; 202: elastic connecting part;
21: camera; 211: optical axis;
301: mounting bracket; 302: mounting groove; 303: camera.

In the drawings, identical parts use identical reference numerals. The drawings are not drawn to actual scale.

### DESCRIPTION OF EMBODIMENTS

The following describes in detail the features and example embodiments of various aspects of the present application. Many specific details are provided in the following detailed description, to provide a full understanding of the present application. However, it is obvious to a person skilled in the art that, the present application can be implemented without some of these specific details. The embodiments are described below only to provide a better understanding of the present application by showing examples of the present application. In the accompanying drawings and the following descriptions, at least some of the well-known structures and technologies are omitted, so as not to unnecessarily obscure the present application; in addition, for the sake of clarity, sizes of some structures may be exaggerated. In addition, the features, structures, or characteristics described below can be combined in one or more embodiments in any suitable manner.

The orientation words appearing in the following descriptions are all directions shown in the figures, and are not intended to limit specific structures of a camera apparatus 200 and a cleaning robot 100 provided in the present application. In the descriptions of the present application, it should be further noted that, unless otherwise specified and limited explicitly, the terms "mounting" and "connection" should be understood in a broad sense, for example, may be fixed connection, detachable connection, or integrated connection; or may be direct connection or indirect connection. The specific meanings about the foregoing terms in the present application may be understood by a person of ordinary skill in the art depending on specific circumstances. Embodiments of the present application provide a camera apparatus 200 with good shockproof performance and good stability. In addition, when a distance between optical axes 211 of the binocular camera 21 (two cameras 21) changes, the camera 21 can be replaced and calibrated at any time, facilitating maintenance and repair.

To better understand the present application, the following describes in detail the camera apparatus 200 according to the embodiments of the present application with reference to FIG. 2.

FIG. 2 is a schematic diagram of a planar structure of a camera apparatus 200 according to some embodiments of the present application.

Further referring to FIG. 2, the camera apparatus 200 provided in the embodiments of the present application includes a mounting bracket 20 and a camera 21 mounted on the mounting bracket 20; the mounting bracket 20 is provided with a mounting groove 201 matching the camera 21; a side wall of the mounting groove 201 is fixedly connected to an electric connecting part 202; and after the camera 21 is mounted in the mounting groove 201, the camera 21 is in interference fit with the mounting groove 201 through the elastic connecting part 202, so that the camera 21 is mounted in the mounting groove 201 under the action of an elastic force generated by the elastic connecting part 202 due to squeezing and deformation.

According to the camera apparatus 200 provided in the embodiments of the present application, the camera 21 has a lens, and in a direction perpendicular to a central axis of the lens, a cross-sectional area of the camera 21 is smaller than a cross-sectional area of the mounting groove 201, so that there is a gap between the camera 21 and the mounting groove 201.

According to the camera apparatus 200 provided in the embodiments of the present application, the elastic connecting part 202 is arranged in the gap, and a side of the elastic connecting part 202 facing the mounting groove 201 is fixedly connected or detachably connected to the mounting bracket 20.

According to the camera apparatus 200 provided in the embodiments of the present application, there are two cameras 21 and two mounting grooves 201, and the mounting grooves 201 are arranged in a one-to-one correspondence with the cameras 21. Two elastic connecting parts 202 are arranged in each mounting groove 201, and the two elastic connecting parts 202 are arranged opposite to each other in a direction of a connection line between center points of the two cameras 21. In a direction of a connection line between center points of the two cameras 21, thicknesses of the two elastic connecting parts 202 are adjustable, and are used to adjust the distance between the optical axes 211 of the two cameras 21. That is, the thicknesses of the elastic connecting parts 202 can be set based on a predetermined distance between the optical axes of the two cameras.

According to the camera apparatus 200 provided in the embodiments of the present application, the elastic connecting part 202 is a ring structure arranged around the side wall of the mounting groove 201. It can be understood that the elastic connecting part 202 may be a closed ring structure or a ring structure with an opening. Alternatively, there are a plurality of elastic connecting parts 202, and the plurality of elastic connecting parts 202 are arranged at intervals in a circumferential direction of the mounting groove 201. Optionally, the elastic connecting part 202 and the mounting bracket 20 are an integrated structure, and hardness of the elastic connecting part 202 is less than hardness of the mounting bracket 20. The elastic connecting part 202 may be a connecting part made of rubber.

According to the camera apparatus 200 provided in the embodiments of the present application, the mounting groove 201 is arranged on the mounting bracket 20, and the elastic connecting part 202 is arranged in the mounting groove 201, so that the camera 21 is mounted in the mounting groove 201 through interference fit. The camera apparatus 200 provides a shockproof function. The camera 21 and the elastic connecting part 202 are non-rigidly connected, and are not likely to fall off when encountering vibrations. The distance between the optical axes 211 of the two cameras 21 is not likely to change relatively. In addition, it is easy to disassemble and assemble the camera apparatus 200. When the distance between the optical axes 211 of the two cameras 21 changes, the camera apparatus 200 does not need to be violently disassembled, and the cameras 21 can be directly adjusted or replaced.

Embodiments of the present application provide a cleaning robot 100, which includes the foregoing camera apparatus 200.

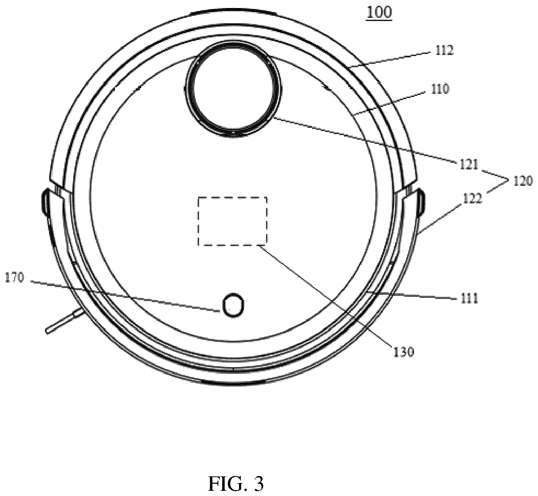

To better understand the present application, the following describes in detail the cleaning robot 100 according to the embodiments of the present application with reference to FIG. 3 to FIG. 6.

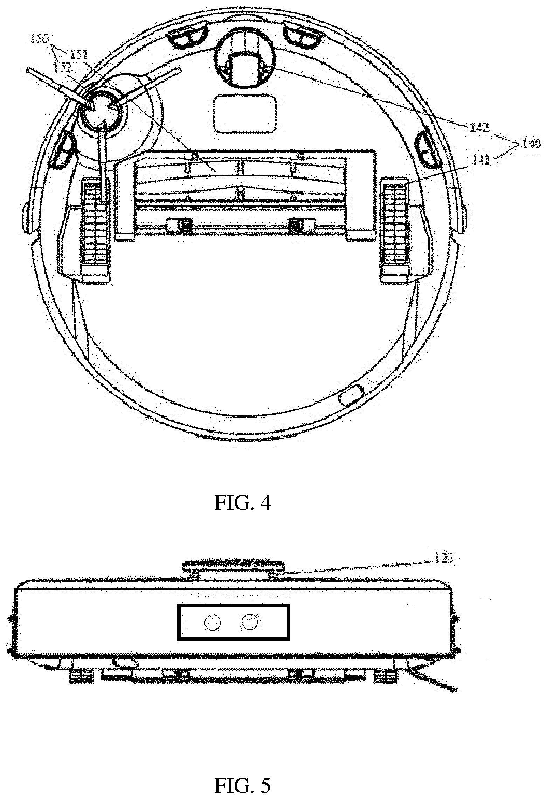

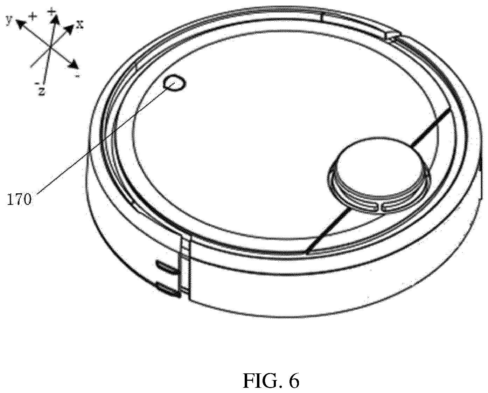

References are made to FIG. 3 to FIG. 6. FIG. 3 is a top view of a cleaning robot 100 according to some embodiments of the present application. FIG. 4 is a bottom view of a cleaning robot 100 according to some embodiments of the present application. FIG. 5 is a side view of a cleaning robot 100 according to some embodiments of the present application. FIG. 6 is an axonometric view of a cleaning robot 100 according to some embodiments of the present application.

Further referring to FIG. 3 to FIG. 6, the cleaning robot 100 includes a machine body 110, a perception system 120, a control system 130 (not shown in the figures), a driving system 140, a cleaning system, an energy system, and a man-machine interaction system 170.

The machine body 110 includes a forward portion 111 and a backward portion 112, and has an approximate circular shape (both the front and the back are circular) or may have other shapes, including but not limited to the approximate D-shape, that is, the front is straight and the back is circular.

The perception system 120 includes sensing apparatuses such as a location determining apparatus 121 located in an upper part of the machine body 110, a buffer 122 located in the forward portion 111 of the machine body 110, a cliff sensor 123, an ultrasonic sensor, an infrared sensor, a magnetometer, an accelerometer, a gyroscope, and an odometer, and provides various location information and movement status information of the machine to the control system 130. The location determining apparatus 121 includes but is not limited to a camera 21 and a laser distance sensor (LDS). The following describes how to determine a location by using an example of a laser distance sensor using a triangular ranging method. The basic principle of the triangular ranging method is based on a proportional relationship between similar triangles. Details are omitted herein for simplicity.

The laser distance sensor includes a light-emitting unit and a light-receiving unit. The light-emitting unit may include a light source that emits light, and the light source may include a light-emitting element such as an infrared or visible light-emitting diode (LED) that emits infrared light or visible light. Preferably, the light source may be a light-emitting element that emits a laser beam. In these embodiments, a laser diode (LD) is used as an example of the light source. Specifically, due to monochromatic, directional, and collimation characteristics of the laser beam, a light source using the laser beam can have more accurate measurement than that using other light. For example, compared with the laser beam, infrared light or visible light emitted by a light-emitting diode (LED) is affected by an ambient factor (for example, a color or texture of an object), and therefore, may have lower measurement accuracy. The laser diode (LD) may be a point laser for measuring two-dimensional location information of an obstacle, or may be a line laser for measuring three-dimensional location information of an obstacle within a specific range.

The light-receiving unit may include an image sensor, and a light spot reflected or scattered by an obstacle is formed on the image sensor. The image sensor may be a set of a plurality of unit pixels in one or more rows. The light-receiving element can convert an optical signal into an electrical signal. The image sensor may be a complementary metal-oxide-semiconductor (CMOS) sensor or a charge coupled device (CCD) sensor, and the complementary metal-oxide-semiconductor (CMOS) sensor is preferred due to the advantage of costs. In addition, the light-receiving unit may include a light-receiving lens component. Light reflected or scattered by an obstacle may travel through the light-receiving lens component to form an image on the image sensor. The light-receiving lens component may include one or more lenses.

A base can support the light-emitting unit and the light-receiving unit, and the light-emitting unit and the light-receiving unit are arranged on the base at a specific distance from each other. In order to measure a status of obstacles in directions from 0 degrees to 360 degrees around the robot, the base can be rotatably arranged on the body 110, or the base may not rotate but a rotation element is arranged to rotate the emitted light and the received light. An optical coupling element and an encoding disk can be arranged to obtain a rotational angular velocity of the rotation element. The optical coupling element senses toothed gaps on the encoding disk, and divides a distance between the toothed gaps by a slip time of the distance between the toothed gaps to obtain an instantaneous angular velocity. Higher density of toothed gaps on the encoding disk indicates higher accuracy and precision of the measurement, a more precise structure, and a larger calculation amount. On the contrary, lower density of toothed gaps indicates lower accuracy and precision of the measurement, a simpler structure, a smaller calculation amount, and lower costs.

A data processing apparatus, such as a DSP, connected to the light-receiving unit records obstacle distances of all angles relative to an angle of 0 degrees of the robot, and transmits the obstacle distances to a data processing unit, such as an application processor (AP) including a CPU, in the control system 130. The CPU runs a particle filter-based positioning algorithm to obtain a current location of the robot and draws a map based on the location for the use in navigation. The positioning algorithm is preferably simultaneous localization and mapping (SLAM).

Although the laser distance sensor based on the triangular ranging method can measure a distance at an infinite distance exceeding a specific distance in principle, the laser distance sensor actually can hardly perform measurement for a large distance (for example, over six meters), mainly because the measurement is limited by dimensions of a pixel unit on a sensor of the light-receiving unit and also affected by an optical-to-electrical conversion speed of the sensor, a data transmission speed between the sensor and the connected DSP, and a calculation speed of the DSP. A measured value obtained by the laser distance sensor under the action of temperature is also subject to a system-intolerable change, mainly because thermal expansion deformation of a structure between the light-emitting unit and the light-receiving unit causes an angle change between incident light and emitted light and the light-emitting unit and the light-receiving unit have a temperature drift problem. After the laser distance sensor is used for a long time, deformation caused by various factors such as a temperature change and vibration may also greatly affect a measurement result. The accuracy of the measurement result directly determines the accuracy of drawing a map, is the basis for further policy implementation of the robot, and therefore is important.

The forward portion 111 of the machine body 110 may carry a buffer 122. When the driving wheel module 141 drives the robot to walk on the floor during cleaning, the buffer 122 detects one or more events in the traveling route of the cleaning robot 100 by using a sensor system, such as an infrared sensor. Based on the events detected by the buffer 122, such as obstacles and walls, the robot can control the driving wheel module 141 to enable the robot to respond to the events, for example, keep away from the obstacles.

The control system 130 is arranged on the main circuit board in the machine body 110. The control system 130 includes non-transient memories such as a hard disk, a flash memory, and a random access memory, and computing processors for communication, such as a central processing unit and an application processor. The application processor draws, based on obstacle information fed back by the laser distance sensor and by using a positioning algorithm such as SLAM, an instant map of an environment in which the robot is located. With reference to distance information and velocity information fed back by sensing apparatuses such as the buffer 122, the cliff sensor 123, the ultrasonic sensor, the infrared sensor, the magnetometer, the accelerometer, the gyroscope, and the odometer, the control system 130 comprehensively determines a current working status of the sweeping machine, such as crossing a threshold, walking on a carpet, reaching a cliff, being stuck by the upper part or lower part, full dust box, or being picked up. In addition, the control system 130 provides a specific next action strategy based on different situations, so that the robot better meets the user's requirements, providing better user experience. Further, the control system 130 can plan a most efficient and reasonable sweeping route and sweeping manner based on information about the instant map that is drawn based on SLAM, thereby greatly improving the sweeping efficiency of the robot.

The driving system 140 may control, based on a driving command including distance and angle information (such as components x, y, and Θ), the cleaning robot 100 to move across the floor. The driving system 140 includes a driving wheel module 141. The driving wheel module 141 can control a left wheel and a right wheel simultaneously. To control the movement of the machine more accurately, the driving wheel module 141 preferably includes a left driving wheel module and a right driving wheel module. The left and right driving wheel modules are symmetrically arranged along a lateral axis that is defined by the body 110. To enable the robot to move more stably on the floor or to have a higher movement ability, the robot may include one or more driven wheels 142, and the driven wheels include but are not limited to universal wheels. The driving wheel module includes a traveling wheel, a driving motor, and a control circuit for controlling the driving motor. The driving wheel module can alternatively be connected to a circuit for measuring a drive current, and to an odometer. The driving wheel module 141 can be detachably connected to the body 110 for easy assembly, disassembly, and maintenance. The driving wheel may have a biased-to-drop hanging system, which is secured in a movable manner, for example, is attached to the robot body 110 in a rotatable manner, and receives a spring bias that is offset downward and away from the robot body 110. The spring bias allows the driving wheel to maintain contact and traction with the floor by using a specific touchdown force, and a cleaning element of the cleaning robot 100 is also in contact with the floor 10 with specific pressure.

The cleaning system may be a dry cleaning system 150 and/or a wet cleaning system. The main cleaning function of the dry cleaning system 150 is derived from a sweeping system 151 that includes a rolling brush, a dust box, a fan, an air outlet, and connecting parts between the four parts. The rolling brush that has certain interference with the floor sweeps rubbish on the floor and rolls the rubbish to the front of a dust suction port between the rolling brush and the dust box, and then the rubbish is sucked into the dust box by gas that is generated by the fan and that has suction force and passes through the dust box. A dust removal ability of the sweeping robot may be represented by dust pick up efficiency (DPU). The DPU is affected by the rolling brush structure and a material thereof, by wind power utilization of an air duct including the dust suction port, the dust box, the fan, the air outlet, and the connecting parts between the four parts, and by a type and power of the fan, and therefore, there is a complex system design problem. The increase in the dust removal ability is more significant for energy-limited cleaning robots than for conventional plug-in cleaners. A higher dust removal ability directly and effectively reduces the energy requirement; in other words, a machine that can clean 80 square meters of the floor previously after being charged for one time can be evolved to clean 100 or more square meters of the floor after being charged for one time. In addition, as a quantity of charging times decreases, a service life of a battery increases greatly, so that frequency of replacing the battery by the user decreases. More intuitively and importantly, a higher dust removal ability is the most visible and important user experience, because it allows the user to directly determine whether the floor is swept/wiped clean. The dry cleaning system 150 may further include a side brush 152 having a rotating shaft. The rotating shaft is located at an angle relative to the floor, so as to move debris into a region of the rolling brush of the cleaning system.

The energy system includes a rechargeable battery, for example, a NiMH battery or a lithium battery. The rechargeable battery can be connected to a charging control circuit, a battery pack charging temperature detection circuit, and a battery undervoltage monitoring circuit. The charging control circuit, the battery pack charging temperature detection circuit, and the battery undervoltage monitoring circuit are connected to a single-chip microcomputer control circuit. The robot is charged by connecting a charging electrode arranged on a side or a lower part of the machine body to the charging pile. If there is dust on the exposed charging electrode, the plastic part around the electrode is melted and deformed due to a charge accumulation effect, or even the electrode is deformed and cannot perform charging normally.

The man-machine interaction system 170 includes buttons on a panel of the robot, which are used by the user to select functions; may further include a display screen, an indicator, and/or a horn, which display the current status of the machine or function options for the user; and may further include a mobile phone client program. For a route-navigated cleaning device, the mobile phone client can show the user a map of the environment in which the device is located, as well as the location of the machine, providing the user with more abundant and user-friendly function options. To describe behavior of the robot more clearly, the following describes definitions of directions. The cleaning robot 100 can travel on the floor through various combinations of movement relative to the following three mutually perpendicular axes defined by a main body 110: a front-back axis X, a lateral axis Y, and a central vertical axis Z. The forward driving direction along the front-back axis X is marked as "forward", and the backward driving direction along the front-back axis X is marked as "backward". The lateral axis Y essentially extends between the right and left wheels of the robot along an axial center defined by the center point of the driving wheel module 141.

The cleaning robot 100 can rotate around the axis Y. When the forward portion of the cleaning robot 100 is tilted upward and the backward portion is tilted downward, "pitchup" is formed. When the forward portion of the cleaning robot 100 is tilted downward and the backward portion is tilted upward, "pitchdown" is formed. In addition, the cleaning robot 100 can rotate around the axis Z. In the forward direction of the robot, when the cleaning robot 100 tilts to the right of the axis X, "right turn" is formed; and when the cleaning robot 100 tilts to the left of the axis X, "left turn" is formed.

The cleaning robot 100 according to the current embodiments may include: a vision unit for recognizing obstacles on the floor, a communications unit for communicating with a remote control device or another device, a moving unit for driving the main body, a cleaning unit, and a memory unit for storing information. An input unit (buttons of the cleaning robot, etc.), an object detection sensor, a charging unit, the microphone array unit, a direction detection unit, a location detection unit, the communications unit, a driving unit, and the memory unit can be connected to a control unit to transmit predetermined information to the control unit or receive predetermined information from the control unit.

The vision unit is mainly configured to recognize objects on the floor and instruct the cleaning robot 100 to bypass the objects on the floor. Object types include but are not limited to:
A. Stuck obstacles: obstacles that may cause the robot to get stuck or that are not suitable for sweeping, such as pet excrement, thick and thin cables, weighing scales, bar chairs, and curtains;
B. Objects that can be pushed by the cleaning robot 100: children's toys, power strips, and slippers;
C. Functional needs: recognize all kinds of carpets (cooperate with the current of the main brush) and record them on the map; prevent carrying of the water tank on carpets (so as to avoid wetting the carpets and avoid secondary pollution); and display the recorded region after recognition on the historical map;
D. Other sundries: set objects with a length greater than 8 cm and a height or thickness greater than 1 cm as sundries, and carry out bypass strategies after recognition. The background, illumination, and angle are the same as those described above.

The direction detection unit can detect a direction of the voice by using a time difference or level of the voice that is input into a plurality of receiving units. The direction detection unit transmits the direction of the detected voice to the control unit. The control unit can determine a moving path by using the voice direction detected by the direction detection unit.

The location detection unit can detect coordinates of the main body in the predetermined map information. In some embodiments, information detected by a camera 21 can be compared with the map information stored in the memory unit to detect a current location of the main body. In addition to the camera 21, the location detection unit can further use a global positioning system (GPS).

In a broad sense, the location detection unit can detect whether the main body is arranged at a specific location. For example, the location detection unit may include a unit for detecting whether the main body is arranged on a charging pile.

For example, in a method for detecting whether the main body is arranged on a charging pile, it can be detected, based on whether power is input into the charging unit, whether the main body is arranged at a charging location. For another example, a charging location detection unit arranged on the main body or the charging pile can be used to detect whether the main body is arranged at the charging location.

The communications unit can transmit/receive predetermined information to/from a remote control device or another device. The communications unit can update the map information of the cleaning robot.

The driving unit can operate the moving unit and the cleaning unit. The driving unit can move the moving unit along a moving path determined by the control unit.

The memory unit stores predetermined information related to the operation of the cleaning robot. For example, map information of the region in which the cleaning robot is arranged, control command information corresponding to the voice recognized by the microphone array unit, direction angle information detected by the direction detection unit, location information detected by the location detection unit, and obstacle information detected by the object detection sensor can be stored in the memory unit.

The control unit can receive information detected by the receiving unit, the camera 21, and the object detection sensor. The control unit can recognize the user's voice based on the transmitted information, detect the direction in which the voice occurs, and detect the location of the cleaning robot. In addition, the control unit can further operate the moving unit and the cleaning unit. Although the present application has been described with reference to optional embodiments, without departing from the scope of the present application, various improvements can be made to the present application and equivalents can be used to replace the parts incorporating the features. In particular, various technical features mentioned in various embodiments can be combined in any manner provided that there is no structural conflict. The present application is not limited to the specific embodiments disclosed in the present specification, but includes all technical solutions falling within the scope of the claims.

## Claims

1. A camera apparatus, comprising a mounting bracket and a camera mounted on the mounting bracket, wherein the mounting bracket is provided with a mounting groove matching the camera; a side wall of the mounting groove is fixedly connected to an electric connecting part; and the camera is in interference fit with the mounting groove through the elastic connecting part, so that the camera is connected to the mounting groove under the action of an elastic force generated by the elastic connecting part due to squeezing and deformation.

2. The camera apparatus according to claim 1, wherein the camera has a lens, and in a direction perpendicular to a central axis of the lens, a cross-sectional area of the camera is smaller than a cross-sectional area of the mounting groove, so that there is a gap between the camera and the mounting groove.

3. The camera apparatus according to claim 2, wherein the elastic connecting part is arranged in the gap, and a side of the elastic connecting part facing the mounting groove is fixedly connected or detachably connected to the mounting bracket.

4. The camera apparatus according to claim 1, wherein there are two cameras and two mounting grooves, and the mounting grooves are arranged in a one-to-one correspondence with the cameras.

5. The camera apparatus according to claim 4, wherein two elastic connecting parts are arranged in each mounting groove, and the two elastic connecting parts are arranged opposite to each other in a direction of a connection line between center points of the two cameras.

6. The camera apparatus according to claim 4, wherein in a direction of a connection line between center points of the two cameras, thicknesses of the two elastic connecting parts are adjustable, and are used to adjust the distance between the optical axes of the two cameras.

7. The camera apparatus according to claim 1, wherein the elastic connecting part is a ring structure arranged around the side wall of the mounting groove.

8. The camera apparatus according to claim 1, wherein there are a plurality of elastic connecting parts, and the plurality of elastic connecting parts are arranged at intervals in a circumferential direction of the mounting groove.

9. The camera apparatus according to claim 1, wherein the elastic connecting part and the mounting bracket are an integrated structure, and hardness of the elastic connecting part is less than hardness of the mounting bracket.

10. A cleaning robot, comprising the camera apparatus according to any one of claims 1 to 9.

11. A cleaning robot, comprising a machine body, a perception system, a control system, and a driving system, wherein the perception system comprises a laser distance sensor and a camera; the laser distance sensor is located on a top surface of the cleaning robot; and the camera is mounted on the cleaning robot through a mounting bracket, and a field of view of the camera comprises a traveling direction of the cleaning robot.

12. The cleaning robot according to claim 11, wherein the mounting bracket is provided with a mounting groove matching the camera, and the camera is mounted in the mounting groove.

13. The cleaning robot according to claim 12, wherein a side wall of the mounting groove is fixedly connected to an electric connecting part; and after the camera is mounted in the mounting groove, the camera is in interference fit with the mounting groove through the elastic connecting part, so that the camera is connected to the mounting groove under the action of an elastic force generated by the elastic connecting part due to squeezing and deformation.

14. The cleaning robot according to claim 12 or 13, wherein the camera has a lens, and in a direction perpendicular to a central axis of the lens, a cross-sectional area of the camera is smaller than a cross-sectional area of the mounting groove, so that there is a gap between the camera and the mounting groove.

15. The cleaning robot according to claim 14, wherein the elastic connecting part is arranged in the gap, and a side of the elastic connecting part facing the mounting groove is fixedly connected or detachably connected to the mounting bracket.

16. The cleaning robot according to claim 12 or 13, wherein there are two cameras and two mounting grooves, and the mounting grooves are arranged in a one-to-one correspondence with the cameras.

17. The cleaning robot according to claim 16, wherein two elastic connecting parts are arranged in each mounting groove, and the two elastic connecting parts are arranged opposite to each other in a direction of a connection line between center points of the two cameras.

18. The cleaning robot according to claim 16, wherein in a direction of a connection line between center points of the two cameras, thicknesses of the two elastic connecting parts are adjustable, and are used to adjust the distance between the optical axes of the two cameras.

19. The cleaning robot according to claim 13, wherein the elastic connecting part is a ring structure arranged around the side wall of the mounting groove.

20. The cleaning robot according to claim 13, wherein there are a plurality of elastic connecting parts, and the plurality of elastic connecting parts are arranged at intervals in a circumferential direction of the mounting groove.

21. The cleaning robot according to claim 13, wherein the elastic connecting part and the mounting bracket are an integrated structure, and hardness of the elastic connecting part is less than hardness of the mounting bracket.

22. A cleaning robot, comprising a machine body, a perception system, a control system, and a driving system, wherein the perception system comprises a laser distance sensor and two cameras; the laser distance sensor is located on a top surface of the cleaning robot; and the two cameras are mounted on the cleaning robot through a mounting bracket.

23. The cleaning robot according to claim 22, wherein the mounting bracket is provided with mounting grooves matching the two cameras, respectively, and each camera is mounted in the corresponding mounting groove.

24. The cleaning robot according to claim 23, wherein a side wall of each mounting groove is fixedly connected to an electric connecting part; and after each camera is mounted in the corresponding mounting groove, the camera is in interference fit with the mounting groove through the elastic connecting part, so that the camera is connected to the mounting groove under the action of an elastic force generated by the elastic connecting part due to squeezing and deformation.

25. The cleaning robot according to claim 23 or 24, wherein the camera has a lens, and in a direction perpendicular to a central axis of the lens, a cross-sectional area of the camera is smaller than a cross-sectional area of the mounting groove, so that there is a gap between the camera and the mounting groove.

26. The cleaning robot according to claim 25, wherein the elastic connecting part is arranged in the gap, and a side of the elastic connecting part facing the mounting groove is fixedly connected or detachably connected to the mounting bracket.
